# EUROPÄISCHE PATENTSCHRIFT

(11) **EP 4 186 725 B1**
(45) Veröffentlichungstag und Bekanntmachung des Hinweises auf die Patenterteilung: **06.08.2025**
(21) Anmeldenummer: 22200855.9
(22) Anmeldetag: 11.10.2022
(51) Int. Cl.: B60H 1/32, F25B 9/08, F25B 5/02, F25B 6/04, F25B 9/00, F25B 40/00, F25B 41/00, F25B 41/20, F25B 6/02

(54) **KLIMATISIERUNGSANORDNUNG MIT GEREGELTEM EJEKTOR**
AIR CONDITIONING ASSEMBLY WITH CONTROLLED EJECTOR
SYSTÈME DE CLIMATISATION À ÉJECTEUR RÉGULÉ

(30) Priorität: 24.11.2021 DE 102021213208
(43) Veröffentlichungstag der Anmeldung: 31.05.2023
(73) Patentinhaber: VOLKSWAGEN AG, 38440 Wolfsburg (DE)
(72) Erfinder: Wolf, Jessica, 38165 Lehre (DE); Sawall, Philipp, Hildesheim 31141 (DE); Schiller, Heino, 38122 Braunschweig (DE)
(74) Vertreter: RGTH

(56) Entgegenhaltungen:
- CN-B- 103 808 101
- DE-A1- 102008 005 076
- DE-A1- 102008 011 255
- DE-T5- 112014 002 876
- US-A1- 2004 123 624

## Beschreibung

Die Erfindung betrifft eine Klimatisierungsanordnung zum Wärmen oder Kühlen eines Raums, insbesondere eines Fahrzeuginnenraums, aufweisend einen Kompressor zum Fördern eines Kältemittels sowie ein Kraftfahrzeug mit einer derartigen Klimatisierungsanordnung.

Es sind bereits Klimaanlagensysteme bekannt, die mit CO₂ als Kältemittel funktionieren. Derartige Klimaanlagensysteme sind derzeit in ihrer Leistungsfähigkeit bei hohen Außentemperaturen begrenzt. Darüber hinaus werden alternative Kältemittel mit besserer Leistungsfähigkeit, wie beispielsweise R1234YF, in Klimaanlagensystemen eingesetzt. Derartige Kältemittel sind jedoch nicht umweltneutral und können je nach Situation entzündlich sein und die Sicherheit beeinträchtigen. Des Weiteren sind Kältemittel wie R1234YF in einem Wärmepumpenbetrieb nur begrenzt einsetzbar.

In der US 7,428,826 B2 ist eine Ejektor-Vorrichtung beschrieben, die einen Kältemittelzufluss zu einem ersten und einem zweiten Verdampfer steuert. In der US7,726,150 B2 ist ebenfalls eine derartige Ejektor-Vorrichtung offenbart.

Aus der US 7,254,961 B2 ist ein Kältemittelkreis mit einem Ejektor bekannt. Der Ejektor ist stromabwärts eines Wärmetauschers bzw. Kondensators angeordnet und dient als Entschleuniger für das Kältemittel.

Die WO 2018/159322 A1 beschreibt einen Ejektor mit einer verstellbaren Düsenöffnung mittels einer beweglichen Nadel.

In der JP 2008-082614 A ist eine Klimaanlage mit einem Ejektor offenbart. Die Klimaanlage weist mehrere Kompressoren auf, um die Kälteleistung zu erhöhen.

Die US 7,707,849 B2 offenbart einen Kältemittelkreis mit einem Ejektor. Der Ejektor ist mit einem ersten Verdampfer, einem zweiten Verdampfer und einem Einstellmechanismus integral ausgeführt.

Die DE 10 2008 005076 A1 beschreibt einen Kältemittelkreis versehen mit einem Kompressor, einem Kondensator bzw. Gaskühler, einem Ejektor mit einem Hochdruckanschluss und einem Sauganschluss, einem Vorverdampfer, einem Separator mit einem Flüssigphasenausgang und einem Gasphasenausgang, einem Niedertemperaturverdampfer, der zwischen dem Flüssigphasenausgang des Separators und dem Sauganschluss angeordnet ist, und einem Überhitzungsverdampfer, der zwischen dem Gasphasenausgang des Separators und der Saugseite des Kompressors angeordnet ist.

Die DE 10 2008 011255 A1 betrifft eine Klimaanlage für ein Kraftfahrzeug und ein Verfahren zum Betrieb dieser Klimaanlage Die Klimaanlage umfasst eine Ejektorpumpe mit einem Ejektorpumpenhaupteingang, einem Ejektorpumpenseiteneingang und einem Ejektorpumpenausgang sowie einen bezüglich des Kreislaufmediums inneren Wärmetauscher mit einem ersten Wärmetauscherdurchgang und einem zweiten Wärmetauscherdurchgang und einen Akkumulator mit einem Akkumulatoreingang und einem ersten Akkumultatorausgang. Der Ejektorpumpenhaupteingang ist stromaufwärts mit dem ersten Wärmetauscherdurchgang verbunden. Der Ejektorpumpenausgang ist stromabwärts mit dem Akkumulatoreingang verbunden.

Die CN 103 808 101 B offenbart ein kombiniertes synergistisches Zweistrahl- und Zweifach-Gegenstrom-Kältekreislaufsystem für einen Zweifach-Kühlschrank. Das kombinierte synergistische Zweistrahl-Gegenstrom-Kältekreislaufsystem für den Zwei-Temperatur-Kühlschrank ist dadurch gekennzeichnet, dass es einen Kompressor, eine Abgas-Gegenstromvorrichtung, einen Kondensator, eine Ansaug-Gegenstromvorrichtung, ein erstes Kapillarrohr, ein zweites Kapillarrohr, einen Kühlkammerverdampfer, einen ersten Injektor, einen zweiten Injektor, einen Gefrierkammerverdampfer und einen Gas-Flüssigkeits-Abscheider umfasst.

Die DE 11 2014 002876 T5 beschreibt einen Ejektorkreislauf, in dem anstelle der hochstufenseitigen Drosselvorrichtung ein hochstufenseitiger Ejektor als ein erster Dekompressionsabschnitt verwendet wird. Hierbei hat der hochstufenseitige Ejektor einen hochstufenseitigen Düsenabschnitt und einen hochstufenseitigen Körperabschnitt. Der hochstufenseitige Düsenabschnitt verringert den Druck eines Kältemittels. Der hochstufenseitige Körperabschnitt ist mit einer hochstufenseitigen Kältemittelansaugöffnung, die das aus einem ersten Verdampfer strömende Kältemittel ansaugt, und einem hochstufenseitigen Diffusorabschnitt ausgebildet, der den Druckeines vermischten Kältemittels erhöht.

Der Erfindung liegt die Aufgabe zugrunde, eine Klimatisierungsanordnung zu schaffen, die das Kältemittel CO₂ auch für Wärmepumpenanwendungen effizient nutzen kann. Insbesondere ist Aufgabe der Erfindung, eine Klimatisierungsanordnung zu schaffen, die auch unter extremen klimatischen Bedingungen zuverlässig mit CO₂ als Kältemittel zuverlässig betreibbar ist.

Diese Aufgabe wird durch die im Anspruch 1 angegebenen Merkmale gelöst. Weitere vorteilhafte Ausgestaltungen der Erfindung sind in den Unteransprüchen beschrieben.

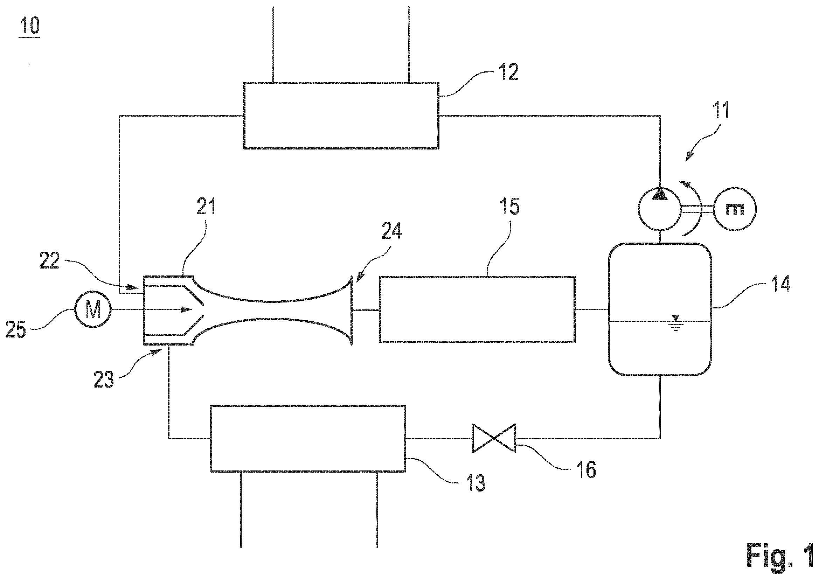

Die in dieser Beschreibung dargestellten Ausgestaltungen der Abbildungen 1-5, die nicht von den Ansprüchen abgedeckt sind, dienen nur der Illustration.

Gemäß einem Aspekt der Erfindung wird eine Klimatisierungsanordnung zum Wärmen oder Kühlen eines Raums, insbesondere eines Fahrzeuginnenraums, bereitgestellt. Die Klimatisierungsanordnung weist einen Kompressor zum Fördern eines Kältemittels auf. Bevorzugterweise kann das Kältemittel CO₂ sein. Die Klimatisierungsanordnung ist jedoch nicht auf CO₂ als Kältemittel begrenzt. Insbesondere können als Kältemittel R1234yf, Propan, Butan bzw. Gemische aus Propan und Butan oder Gemische aus CO₂ und dergleichen durch die Klimatisierungsanordnung verwendet werden.

Die Klimatisierungsanordnung weist weiterhin einen Hochdruckchiller, einen Niederdruckchiller, einen Flüssigkeitsabscheider bzw. Economiser und einen geregelten ersten Ejektor auf.

Stromabwärts des Kompressors sind ein Hochdruckchiller zum Kühlen des Kältemittels und stromaufwärts des Kompressors ein Niederdruckchiller zum Wärmen des Kältemittels angeordnet. Alternativ kann anstelle des Hochdruckchillers ein Gaskühler und/oder ein Innenraumkondensator angeordnet sein, um die entsprechende Funktion umzusetzen.

Ein aus dem Hochdruckchiller oder aus dem Gaskühler und/oder dem Innenraumkondensator austretendes Kältemittel ist einem Treibmasseneingang eines ersten geregelten Ejektors und ein aus dem Niederdruckchiller austretendes Kältemittel ist einem Saugmasseneingang des ersten Ejektors zuführbar. Darüber hinaus ist ein Ausgang des ersten Ejektors direkt oder indirekt mit einem Flüssigkeitsabscheider verbunden.

Gemäß einem weiteren Aspekt der Erfindung wird ein Kraftfahrzeug bereitgestellt, welches eine erfindungsgemäße Klimatisierungsanordnung aufweist.

Die Klimatisierungsanordnung kann beispielsweise als ein CO₂-Klimaanlagensystem betrieben werden, welches eine erhöhte Effizienz aufweist. Ein mit einer derartigen Klimatisierungsanordnung ausgestattetes Elektrofahrzeug kann somit von einer Reichweitenerhöhung profitieren. Dabei ermöglicht die Klimatisierungsanordnung die zuverlässige Verwendung von CO₂ als Kältemittel auch bei extremen klimatischen Bedingungen.

Der erste Ejektor ist vorzugsweise als ein geregelter Ejektor ausgestaltet. An dem Treibmasseneingang des ersten Ejektors kann ein Treibmassenstrom bereitgestellt werden, welches einen gegenüber einem Saugmassenstrom erhöhten Druck aufweist. Somit kann in einem Ringspalt zwischen einer Düse und einer Nadel des Ejektors der Treibmassenstrom durch den Saugmassenstrom beschleunigt werden. Der Impuls des Treibmassenstroms wird nach dem Passieren der Düse auf den Saugmassenstrom übertragen. Beide Massenströme vermischen sich hierbei. Im nachgeschalteten Diffusor des ersten Ejektors vergrößert sich der Querschnitt, wodurch sich die Geschwindigkeit des resultierenden Summenmassenstroms verringert und der Druck über das Niveau des Saugmassenstroms steigt. Der Diffusor bildet den Ausgang des ersten Ejektors.

Durch eine axiale Verschiebung der Nadel gegenüber der Düse wird die Größe des Ringspaltes an Anforderungen und Randbedingungen angepasst. Somit kann ein variabler Düsenquerschnitt realisiert werden. Als Aktor zum Regeln des ersten Ejektors können Proportionalmagneten mit einer Positionssensorik, Schrittmotoren mit Spindelgetrieben, DC-Motoren mit Spindelgetrieben oder Aktoren auf Basis von Formgedächtnislegierungen eingesetzt werden.

Bevorzugterweise kann die Klimatisierungsanordnung in kombinierten Klimaanlagen- und Wärmepumpensystemen in Elektrofahrzeugen bzw. BEV verwendet werden. Hierbei kann insbesondere Kohlenstoffdioxid bzw. CO₂ als Kältemittel eingesetzt werden, welches im Klimaanlagenbetrieb und im Wärmepumpenbetrieb nutzbar ist.

Aufgrund des Aufbaues der Klimatisierungsanordnung und durch die Eigenschaften von CO₂ entstehen innerhalb des Ejektors unterschiedliche Phasenzustände und Phasenwechsel. Hierdurch kann es zu Druckstößen bzw. Pulsationen kommen. Durch die Variabilität des Düsenquerschnitts können Betriebspunkte mit Schockwellen oder Pulsationen in dem 2-Phasen-Ejektor vermieden werden.

Des Weiteren kann mittels der Klimatisierungsanordnung ein erhöhtes Temperatur-Delta zwischen Verdampfer bzw. dem Hochdruckchiller und dem Kondensator bzw. dem Niederdruckchiller genutzt werden.

Die Effizienz der Klimatisierungsanordnung kann gesteigert werden, wenn der Ausgang des ersten Ejektors indirekt über einen Innenraumverdampfer mit dem Flüssigkeitsabscheider verbunden ist. Hierdurch kann beispielsweise dem Fahrzeuginnenraum Kälteleistung zugeführt werden, bevor das Kältemittel den Flüssigkeitsabscheider erreicht. In dem Flüssigkeitsabscheider, welcher vorzugsweise als ein sogenannter Economiser ausgestaltet ist, kann das Kältemittel in seine gasförmigen und flüssigen Bestandteile separiert werden. Die gasförmigen Bestandteile des Kältemittels werden anschließend in Richtung des Kompressors und die flüssigen Bestandteile des Kältemittels in Richtung des Niederdruckchillers gefördert bzw. geleitet.

Gemäß einem weiteren Ausführungsbeispiel ist ein Innenraumverdampfer parallel zum Niederdruckchiller geschaltet, wobei dem Innenraumverdampfer und/oder dem Niederdruckchiller ein Expansionsventil vorgeschaltet ist. Durch das Vorschalten eines Expansionsventils kann der Zufluss des zumindest teilweise kondensierten Kältemittels präzise zum Niederdruckchiller und/oder zum Innenraumverdampfer gesteuert werden. Insbesondere im Innenraumverdampfer kann das teilweise oder vollständig in flüssiger Phase vorliegende Kältemittel erneut verdampft werden, wodurch zusätzliche Kälteleistung erzeugt wird.

Der Kältemittelzulauf zum ersten Ejektor kann vorgekühlt werden, wenn ein Kältemittelausgang des Hochdruckchillers oder des Gaskühlers thermisch mit einem Kältemitteleingang des Kompressors, insbesondere über einen inneren Wärmetauscher, gekoppelt ist. Durch diese Maßnahme kann auch ein optionaler Gaskühler im Frontend entfallen.

Der Niederdruckchiller und der Hochdruckchiller werden durch Kühlwasser bzw. Heizwasser thermisch beaufschlagt, um das passierende Kältemittel aufzuwärmen oder abzukühlen. Der entsprechende Wärmetransfer zwischen Umgebungsluft und Kältemittel erfolgt somit über das Kühlwasser. Die Effizienzverluste durch den Wärmetransfer über das Kühlwasser werden durch die Effizienzsteigerung der Klimatisierungsvorrichtung kompensiert.

Erfindungsgemäß ist der Ausgang des ersten Ejektors indirekt über einen zweiten Ejektor mit dem Flüssigkeitsabscheider verbunden, wobei der Ausgang des ersten Ejektors mit einem Saugmasseneingang des zweiten Ejektors und der Ausgang des zweiten Ejektors mit dem Flüssigkeitsabscheider verbunden ist. Durch diese Maßnahme können weitere Komponenten, insbesondere Innenraumverdampfer oder Innenraumkondensatoren in die Klimatisierungsanordnung integriert werden. Der zweite Ejektor ist vorzugsweise ebenfalls als ein geregelter Ejektor analog der Ausgestaltung des ersten Ejektors ausgeführt. Hierdurch kann der Kältemittelstrom durch die zusätzlich integrierte Komponente unabhängig vom ersten Ejektor gesteuert werden.

Die Klimatisierungsanordnung kann besonders vielseitig eingesetzt werden, da erfindungsgemäß eine dem Kompressor stromabwärts oder eine dem Kompressor stromaufwärts, insbesondere stromabwärts des Flüssigkeitsabscheiders, oder eine dem Hochdruckchiller stromabwärts angeordnete Abzweigung über einen Innenraumwärmetauscher mit einem Treibmasseneingang des ersten Ejektors oder des zweiten Ejektors verbunden ist.

Erfindungsgemäß ist der Ausgang des ersten Ejektors mit einem Treibmasseneingang des zweiten Ejektors verbunden, wobei ein Innenraumwärmetauscher ein stromaufwärts des Niederdruckchillers abgezweigtes Kältemittel durchströmt und mit dem Saugmasseneingang des ersten Ejektors verbunden ist; oder wobei der Innenraumwärmetauscher ein dem Hochdruckchiller stromabwärts abgezweigtes Kältemittel durchströmt und mit dem Saugmasseneingang des zweiten Ejektors verbunden ist. Hierdurch kann der Innenraumwärmetauscher wahlweise mit der Hochdruckseite oder mit der Niederdruckseite des Kältemittels verbunden werden, um eine Wärmeleistung oder eine Kälteleistung dem Raum, insbesondere dem Fahrzeuginnenraum, zuzuführen.

Die Klimatisierungsanordnung kann optimal auch mit CO₂ als Kältemittel für Heißlandanwendungen eingesetzt werden, wenn zwischen dem Kältemittelausgang des Hochdruckchillers und dem Treibmasseneingang des ersten Ejektors oder zwischen dem Kältemittelausgang des Flüssigkeitsabscheiders und dem Treibmasseneingang des ersten Ejektors ein Gaskühler schaltbar ist. Darüber hinaus können durch den zusätzlichen Gaskühler auch erhöhte Komfortansprüche, die einen höheren Bedarf an Kälteleistung aufweisen, zuverlässig umgesetzt werden.

Nach einer weiteren Ausführungsform ist ein Kältemittelausgang eines Gaskühlers mit dem Treibmasseneingang des zweiten Ejektors verbindbar. Je nach Ausgestaltung der Klimatisierungsanordnung kann der Gaskühler grundsätzlich für den Wärmetransfer in beliebiger Richtung eingesetzt werden. Somit kann der Gaskühler zum Abführen von Wärme aus dem Kältemittel oder zum Zuführen von Wärme zu dem Kältemittel verwendet werden.

Nachfolgend werden Ausführungsbeispiele der Erfindung anhand der Zeichnungen näher erläutert. Es zeigen:
- Fig. 1: eine schematische Darstellung einer Klimatisierungsvorrichtung gemäß einem ersten, nicht erfindungsgemäßen, Ausführungsbeispiel,
- Fig. 2: eine schematische Darstellung einer Klimatisierungsvorrichtung gemäß einem zweiten, nicht erfindungsgemäßen, Ausführungsbeispiel,
- Fig. 3: eine schematische Darstellung einer Klimatisierungsvorrichtung gemäß einem dritten, nicht erfindungsgemäßen, Ausführungsbeispiel,
- Fig. 4: eine schematische Darstellung einer Klimatisierungsvorrichtung gemäß einem vierten, nicht erfindungsgemäßen, Ausführungsbeispiel,
- Fig. 5: eine schematische Darstellung einer Klimatisierungsvorrichtung gemäß einem fünften, nicht erfindungsgemäßen, Ausführungsbeispiel,
- Fig. 6: schematische Darstellungen einer Klimatisierungsvorrichtung gemäß einem sechsen Ausführungsbeispiel in einem Kühlbetrieb und in einem Heizbetrieb,
- Fig. 7: schematische Darstellungen einer Klimatisierungsvorrichtung gemäß einem siebten Ausführungsbeispiel in einem Kühlbetrieb und in einem Heizbetrieb,
- Fig. 8: schematische Darstellungen einer Klimatisierungsvorrichtung gemäß einem achten Ausführungsbeispiel in einem Klimaanlagenbetrieb und in einem Wärmepumpenbetrieb,
- Fig. 9: schematische Darstellungen einer Klimatisierungsvorrichtung gemäß einem neunten Ausführungsbeispiel in einem Klimaanlagenbetrieb und in einem Wärmepumpenbetrieb,
- Fig. 10: schematische Darstellungen einer Klimatisierungsvorrichtung gemäß einem zehnten Ausführungsbeispiel in einem Klimaanlagenbetrieb, in einem Wärmepumpenbetrieb und in einem Reheat-Betrieb,
- Fig. 11: schematische Darstellungen einer Klimatisierungsvorrichtung gemäß einem elften Ausführungsbeispiel in einem Klimaanlagenbetrieb und in einem Heizbetrieb,
- Fig. 12: schematische Darstellungen einer Klimatisierungsvorrichtung gemäß einem zwölften Ausführungsbeispiel in einem Klimaanlagenbetrieb und in einem Heizbetrieb, und
- Fig. 13: eine Seitenansicht auf ein erfindungsgemäßes Kraftfahrzeug gemäß einem Ausführungsbeispiel mit einer Klimatisierungsvorrichtung.

In den Figuren weisen dieselben konstruktiven Elemente jeweils dieselben Bezugsziffern auf.

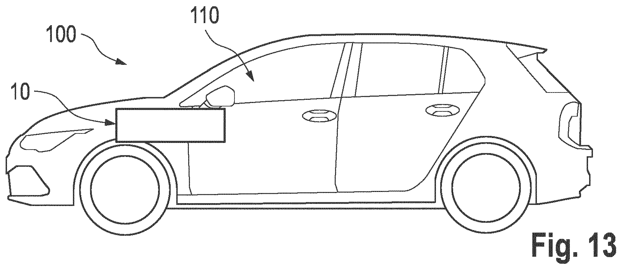

Die Fig. 1 zeigt eine schematische Darstellung einer Klimatisierungsvorrichtung 10 gemäß einem ersten Ausführungsbeispiel. Die Klimatisierungsanordnung 10 dient zum Wärmen oder Kühlen eines beispielhaften Fahrzeuginnenraums 110, welcher in der Fig. 13 veranschaulicht ist.

Die Klimatisierungsanordnung 10 weist einen Kompressor 11 zum Fördern eines Kältemittels auf. Als Kältemittel kann beispielsweise CO₂ eingesetzt werden. Im dargestellten Ausführungsbeispiel ist der Kompressor 11 als ein elektrisch angetriebener Verdichter ausgestaltet.

Stromabwärts des Kompressors 10 ist ein Hochdruckchiller 12 zum Kühlen des Kältemittels bzw. zum Abführen von Wärme des Kältemittels an einen nicht dargestellten Wasserkühlkreis vorgesehen.

Analog zum Hochdruckchiller 12 ist stromaufwärts des Kompressors 10 ein Niederdruckchiller 13 zum Wärmen des Kältemittels bzw. zum Entnehmen von Wärmeleistung aus dem thermisch gekoppelten Wasserkühlkreis vorgesehen.

Ein aus dem Hochdruckchiller 12 austretendes Kältemittel wird einem Treibmasseneingang 22 eines ersten Ejektors 21 und ein aus dem Niederdruckchiller 13 austretendes Kältemittel einem Saugmasseneingang 23 des ersten Ejektors 20 zugeführt.

Ein Ausgang 24 des ersten Ejektors 21 ist im dargestellten Ausführungsbeispiel indirekt über einen Innenraumverdampfer 15 mit einem Flüssigkeitsabscheider 14 verbunden. Der Innenraumverdampfer 15 ist vorzugsweise thermisch mit dem Fahrzeuginnenraum 110 gekoppelt und kann beispielsweise von einem Innenraumgebläse mit Luft durchströmt werden.

Der Flüssigkeitsabscheider 14 ist als ein Economiser ausgeführt und kann die flüssige Phase von der gasförmigen Phase des Kältemittels trennen. Entsprechend kann die gasförmige Phase in Richtung des Kompressors 10 und die flüssige Phase zum Niederdruckchiller 13 geleitet werden.

Der erste Ejektor 21 ist als ein geregelter Ejektor ausgestaltet und weist einen elektrischen Antrieb 25 auf. Der elektrische Antrieb 25 dient zum Einstellen eines Querschnitts eines nicht dargestellten Ringspalts, mit dem die Geschwindigkeit bzw. ein Volumenstrom des Treibmassenstroms, welcher durch den Treibmasseneingang 22 zugeführt wird, eingestellt wird.

Des Weiteren ist zwischen dem Flüssigkeitsabscheider 14 und dem Niederdruckchiller 13 ein Expansionsventil 16 angeordnet, um das in flüssiger Phase dem Niederdruckchiller 13 zugeführte Kältemittel zu verdampfen und somit abzukühlen.

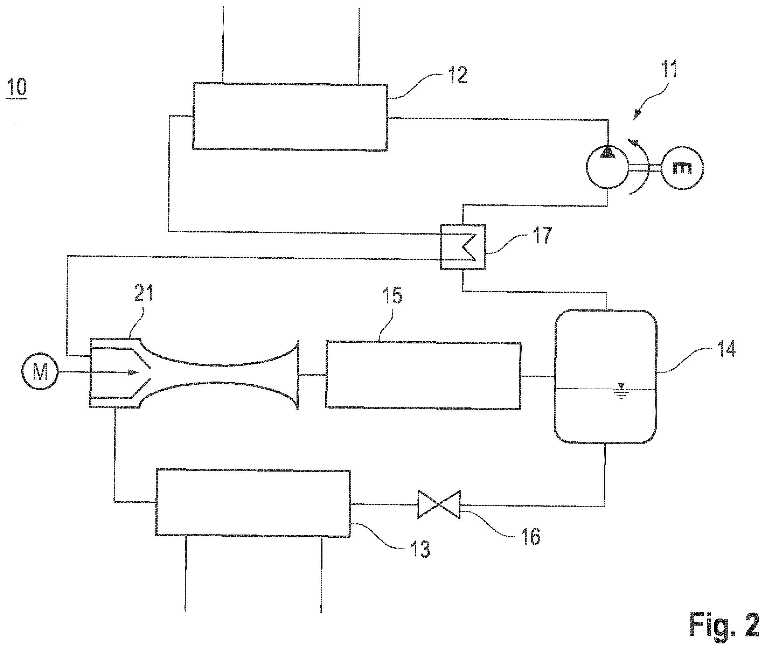

In der Fig. 2 ist eine schematische Darstellung einer Klimatisierungsvorrichtung 10 gemäß einem zweiten Ausführungsbeispiel veranschaulicht. Im Unterschied zum ersten Ausführungsbeispiel ist hier ein innerer Wärmetauscher 17 vorgesehen, welcher einen Kältemittelausgang des Hochdruckchillers 12 thermisch mit einem Kältemitteleingang des Kompressors 11 koppelt.

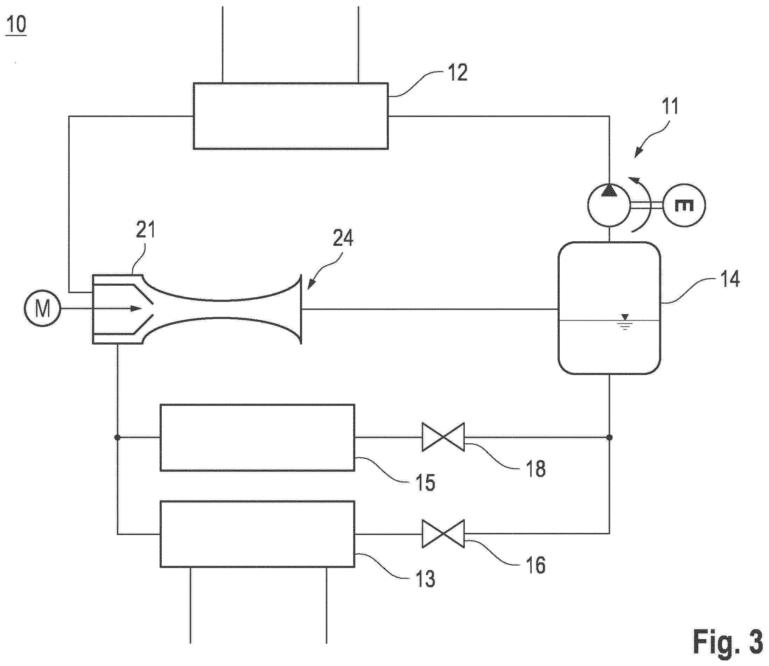

Die Fig. 3 zeigt eine schematische Darstellung einer Klimatisierungsvorrichtung 10 gemäß einem dritten Ausführungsbeispiel. Die Klimatisierungsvorrichtung 10 gemäß einem dritten Ausführungsbeispiel basiert auf den bereits beschriebenen Ausführungsbeispielen, jedoch ist der Innenraumverdampfer 15 parallel zu dem Niederdruckchiller 13 angeordnet. Dabei ist dem Innenraumverdampfer 15, analog zum Niederdruckchiller 13, ein Expansionsventil 18 vorgeschaltet.

Da der Innenraumverdampfer 15 an einer neuen Position angeordnet ist, kann der erste Ejektor 21, insbesondere der Ausgang 24 des ersten Ejektors 21, unmittelbar bzw. direkt mit dem Flüssigkeitsabscheider 14 verbunden werden.

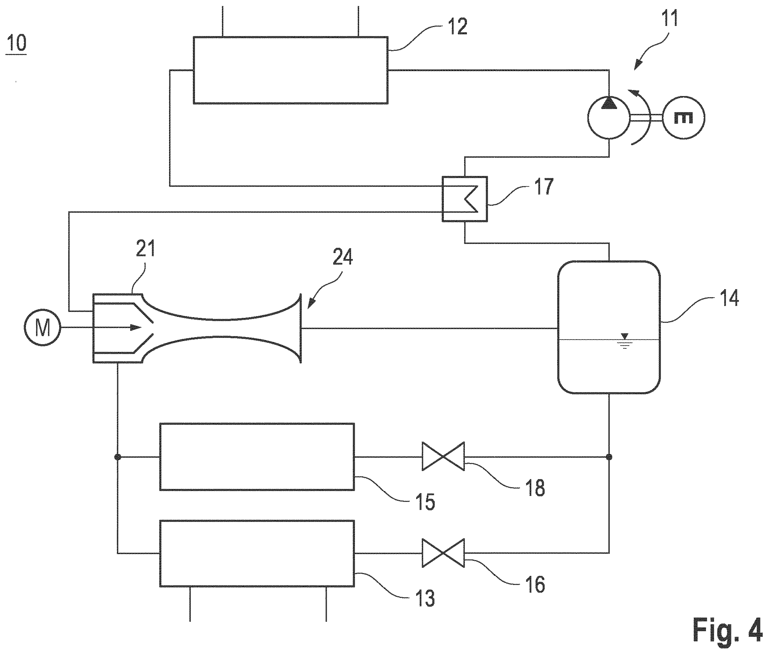

Die Fig. 4 zeigt eine schematische Darstellung einer Klimatisierungsvorrichtung 10 gemäß einem vierten Ausführungsbeispiel, welches auf dem zweiten Ausführungsbeispiel basiert. Dabei ist im vierten Ausführungsbeispiel, analog zum dritten Ausführungsbeispiel, der Innenraumverdampfer 15 stromabwärts des Flüssigkeitsabscheiders 14 und parallel zum Niederdruckchiller 13 versetzt. Es ist ebenfalls ein innerer Wärmetauscher 17 vorhanden, welcher den Kältemittelausgang des Hochdruckchillers 12 thermisch mit dem Kältemitteleingang des Kompressors 11 koppelt.

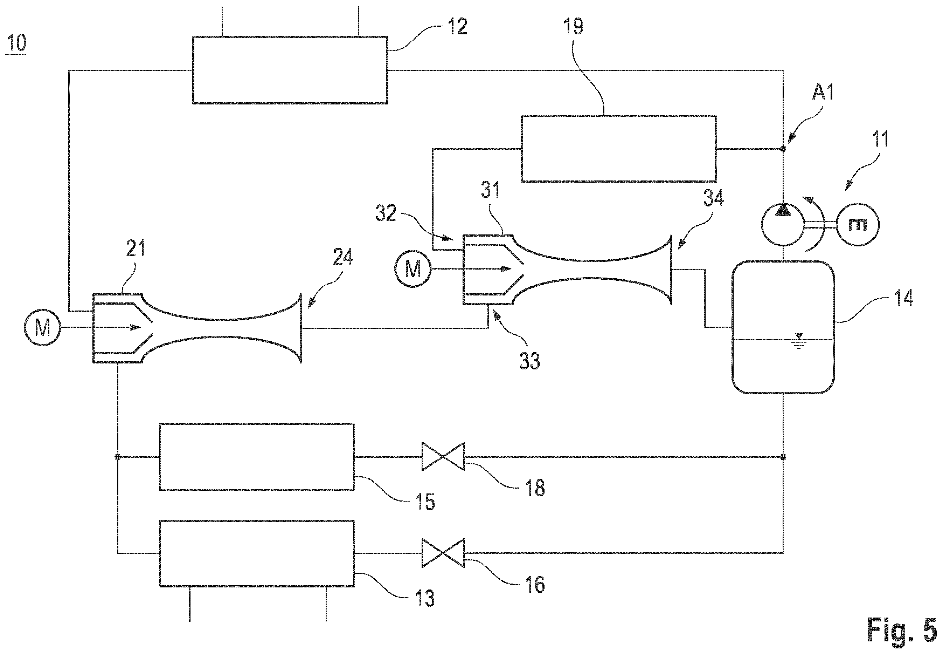

Die Fig. 5 veranschaulicht in einer schematischen Darstellung eine Klimatisierungsvorrichtung 10 gemäß einem fünften Ausführungsbeispiel. Die Klimatisierungsvorrichtung 10 gemäß dem fünften Ausführungsbeispiel basiert auf dem dritten Ausführungsbeispiel und weist einen Innenraumkondensator 19 auf.

Der Innenraumkondensator 19 ist dem Kompressor 11 stromabwärts, parallel zum Hochdruckchiller 12, angeordnet.

Des Weiteren mündet der Ausgang 24 des ersten Ejektors 21 in einem Saugmasseneingang 33 eines zweiten Ejektors 31. Der Innenraumkondensator 19 ist mit einem Treibmasseneingang 32 des zweiten Ejektors 31 verbunden. Ein Ausgang 34 des zweiten Ejektors 31 mündet schließlich in den Flüssigkeitsabscheider 14. Somit ist der erste Ejektor 21 indirekt über den zweiten Ejektor 31 mit dem Flüssigkeitsabscheider 14 verbunden.

Der zweite Ejektor 31 ist analog zum ersten Ejektor 21 als ein geregelter Ejektor ausgestaltet.

Im fünften Ausführungsbeispiel ist eine dem Kompressor stromabwärts angeordnete Abzweigung A1 indirekt über den Innenraumkondensator 19 mit dem Treibmasseneingang 22 des zweiten Ejektors 31 verbunden.

Parallel zum Hochdruckchiller 12 ist somit ein Innenraumkondensator 19 angeordnet, der dazu eingerichtet ist, eine Zuluft des Fahrzeuginnenraums 110 zu heizen. Die zweite Strahlpumpe bzw. der zweite Ejektor 31 dient zur Regelung der Beaufschlagung und Nutzung der Expansionsarbeit.

Im fünften Ausführungsbeispiel werden sowohl Heizen, als auch Kühlen und Reheat durch direkte Wärmeübergabe aus dem Klimakreislauf zur Innenraumluft realisiert.

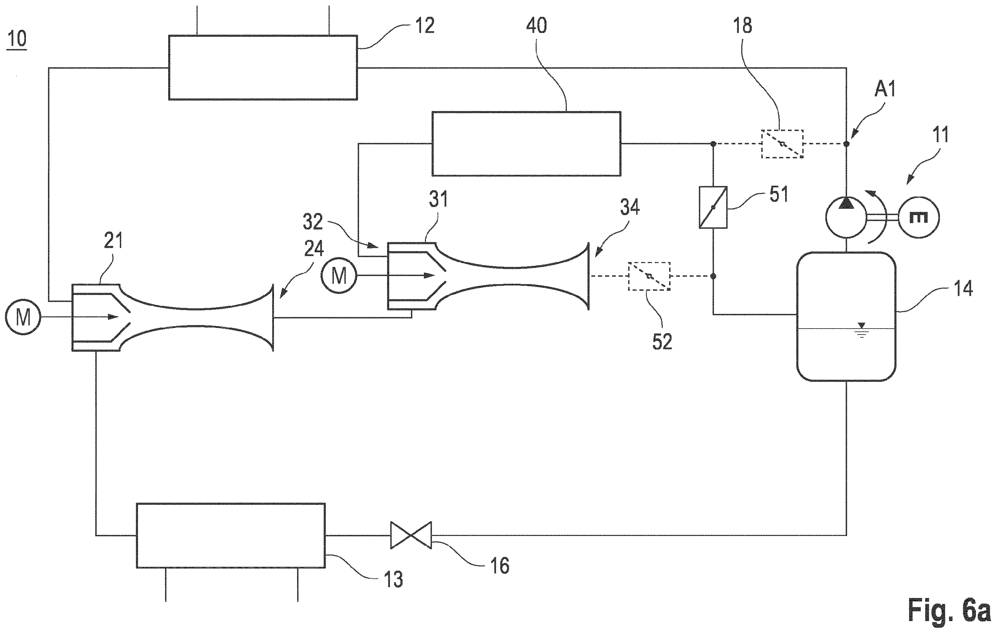

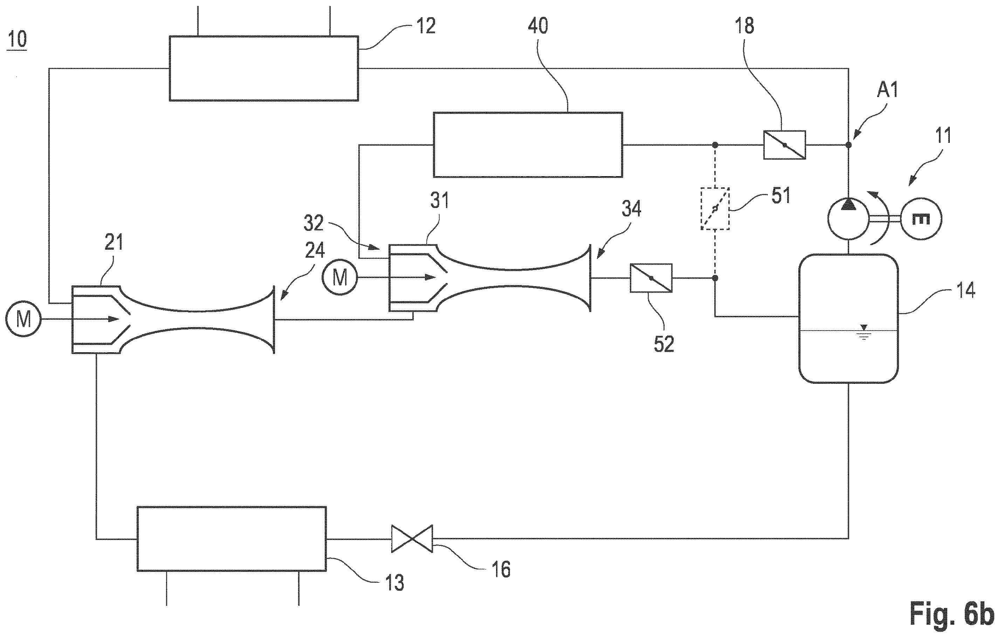

Die Fig. 6a und Fig. 6b zeigen schematische Darstellungen einer Klimatisierungsvorrichtung 10 gemäß einem sechsen Ausführungsbeispiel in einem Kühlbetrieb und in einem Heizbetrieb. Die Fig. 6a zeigt dabei die Klimatisierungsvorrichtung 10 in einem Kühlbetrieb bzw. Klimaanlagenbetrieb und die Fig. 6b die Klimatisierungsvorrichtung in einem Heizbetrieb.

Das sechste Ausführungsbeispiel basiert auf dem ersten Ausführungsbeispiel und wurde durch den zweiten Ejektor 31 und einen Innenraumwärmetauscher 40 erweitert. Der Innenraumwärmetauscher 40 ist parallel zum zweiten Ejektor 31 angeordnet und ist mit dem Treibmasseneingang 32 des zweiten Ejektors 31 verbunden. Im Kühlbetrieb ist der Innenraumwärmetauscher 40 über den Flüssigkeitsabscheider 14 mit dem zweiten Ejektor 31 gekoppelt.

Zum Umsetzen des Heizbetriebs ist die Anbindung des Innenraumwärmetauschers 40 über eine dem Kompressor stromabwärts angeordnete Abzweigung A1 erforderlich. In beiden Betriebsmodi mündet der Innenraumwärmetauscher 40 im Treibmasseneingang 32 des zweiten Ejektors 31. In der Abzweigung A1 ist ein Expansionsventil 18 positioniert.

Das Umschalten der Betriebsmodi erfolgt über zwei Ventile 51, 52.

Optional kann ein nicht dargestellter Wasserwärmetauscher oder ein Luftheizer für die Innenraumluft vorgesehen sein, um den Reheat-Betrieb zur Lufttrocknung im Fahrzeuginnenraum 110 sicherzustellen.

Die in den Fig. 1 bis 20 gezeigten Ausführungsbeispiele erklären das Prinzip, der Einfachheit halber, anhand eines Kraftfahrzeugs 100 (s. Fig. 21). Die Klimatisierungsanordnung 10 ist jedoch nicht auf den Einsatz in Kraftfahrzeugen 100 beschränkt.

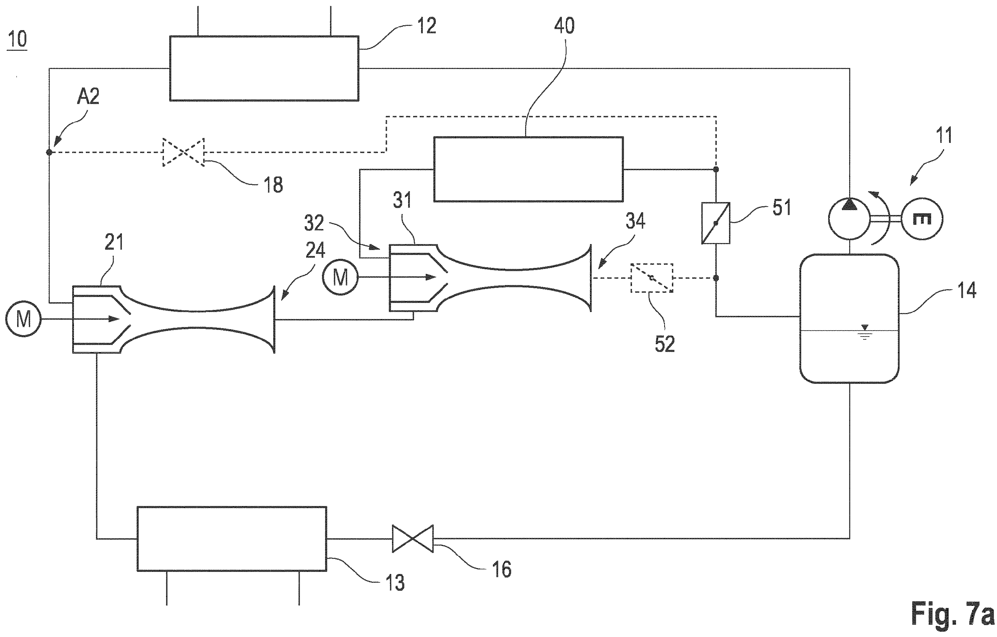

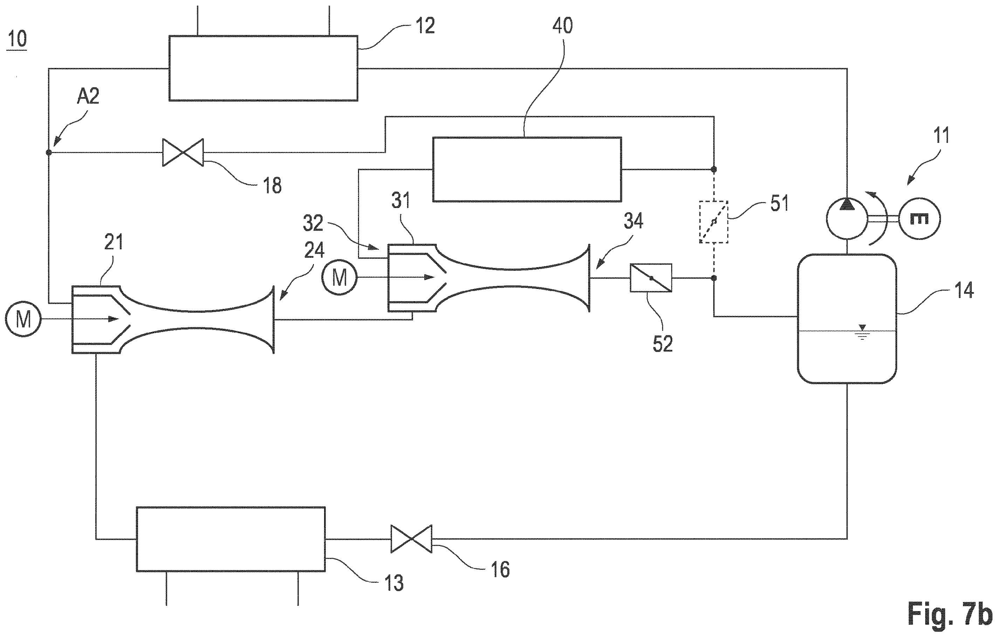

In der Fig. 7a und der Fig. 7b sind schematische Darstellungen einer Klimatisierungsvorrichtung gemäß einem siebten Ausführungsbeispiel in einem Kühlbetrieb und in einem Heizbetrieb gezeigt. Im Wesentlichen entspricht das siebte Ausführungsbeispiel dem sechsten Ausführungsbeispiel. Insbesondere der in Fig. 7a gezeigte Betriebsmodus zum Kühlen des Fahrzeuginnenraums 110 mittels des Innenraumwärmetauschers 40 entspricht der Fig. 6a.

Die Fig. 7b unterscheidet sich dahingehend, dass eine Abzweigung A2 stromabwärts des Hochdruckchillers 12 verwendet wird, um den Innenraumwärmetauscher 40 mit Kältemittel zu versorgen und dem Treibmasseneingang 32 des zweiten Ejektors 31 zuzuführen.

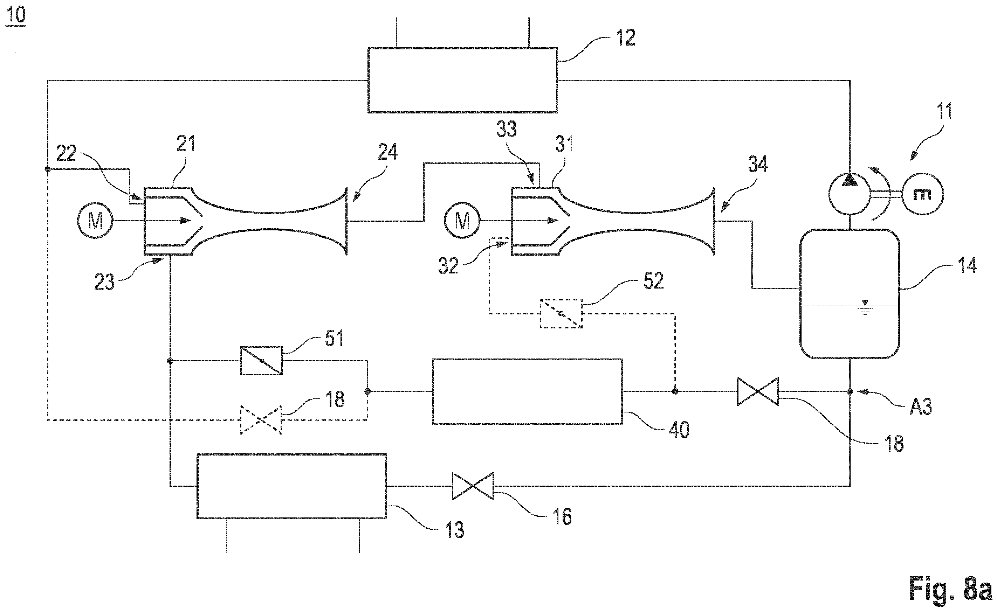

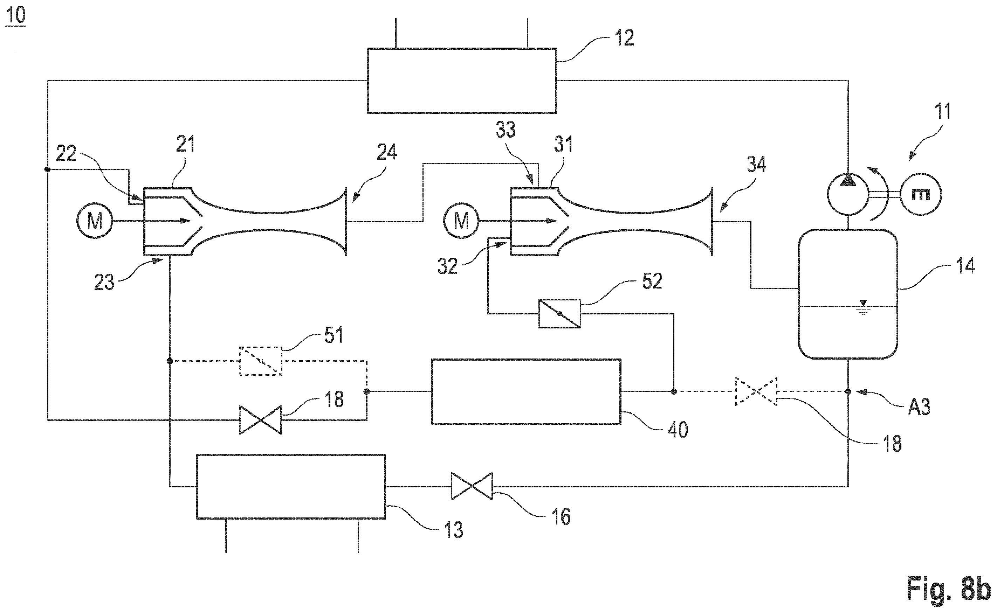

In der Fig. 8a und Fig. 8b sind schematische Darstellungen einer Klimatisierungsvorrichtung 10 gemäß einem achten Ausführungsbeispiel in einem Klimaanlagenbetrieb und in einem Wärmepumpenbetrieb veranschaulicht. Das achte Ausführungsbeispiel basiert auf dem zweiten Ausführungsbeispiel und wurde durch den zweiten Ejektor 31 ergänzt, der parallel zu einem Innenraumwärmetauscher 40 angeordnet ist. Der Innenraumwärmetauscher 40 ersetzt hierbei den Innenraumverdampfer 15.

Im Kühlbetrieb wird der Innenraumwärmetauscher 40 über eine dritte Abzweigung A3, die zwischen dem Niederdruckchiller 13 und dem Flüssigkeitsabscheider 14 angeordnet ist, mit Kältemittel versorgt. Der Innenraumwärmetauscher 40 mündet in dem Saugmassenanschluss 23 des ersten Ejektors 21.

Im Wärmepumpenbetrieb, welcher in Fig. 8b illustriert ist, wird der Innenraumwärmetauscher 40 parallel zum Treibmassenanschluss 22 des ersten Ejektors 21 mit dem Treibmassenanschluss 32des zweiten Ejektors 31 verbunden. Im Wärmepumpenbetrieb kann der Innenraumwärmetauscher 40 über die Abzweigung parallel zum Hochdruckchiller 12 geschaltet und zum Erwärmen des Fahrzeuginnenraums 110 eingesetzt werden.

Im Kühlbetrieb der Klimatisierungsvorrichtung 10 ist dem Innenraumwärmetauscher 40 ein Expansionsventil 18 vorgeschaltet.

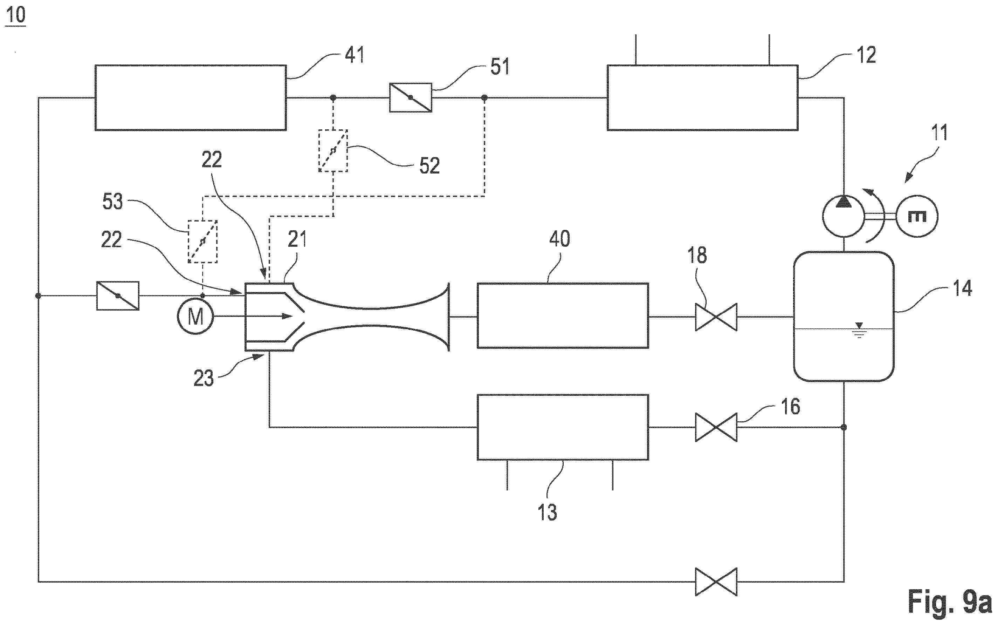

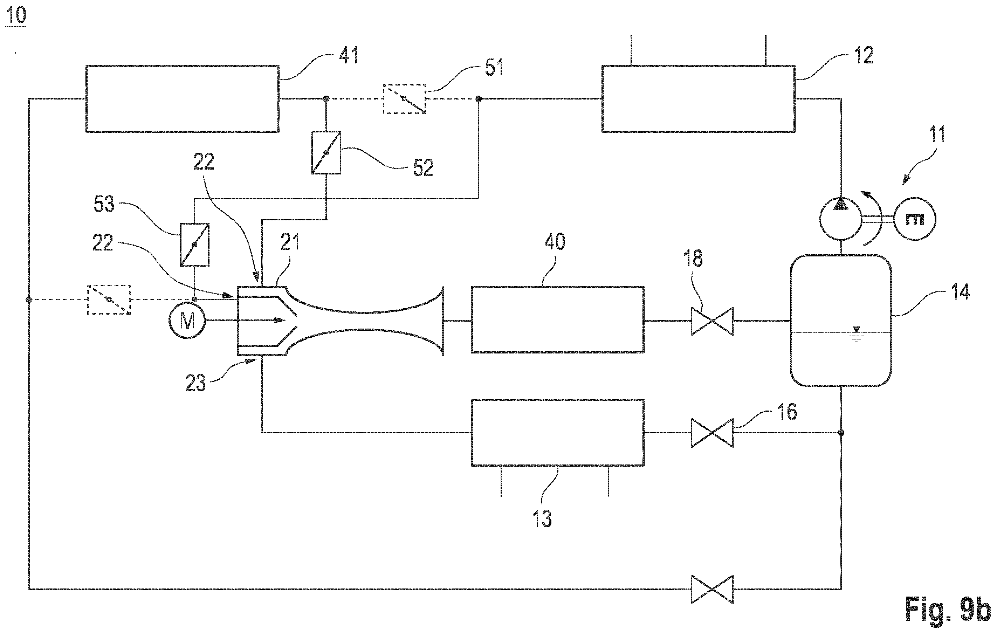

In den nachfolgenden Ausführungsbeispielen, die in den Fig. 9 bis Fig. 12 gezeigt sind, werden zusätzliche Gaskühler 41 verwendet. Diese zusätzlichen Gaskühler 41 können beispielsweise in einem Frontend des Kraftfahrzeugs 100 positioniert sein. Dabei ist eine direkte Wärmeübertragung zwischen dem Kältemittel und einer Umgebung möglich. Dabei kann je nach Ausgestaltung auch ein optionaler innerer Wärmeübertrager 17 verwendet werden.

In der Fig. 9a und der Fig. 9b sind schematische Darstellungen einer Klimatisierungsvorrichtung 10 gemäß einem neunten Ausführungsbeispiel in einem Klimaanlagenbetrieb und in einem Wärmepumpenbetrieb dargestellt. Im Wesentlichen basiert das neunte Ausführungsbeispiel auf dem ersten Ausführungsbeispiel und wurde durch den Gaskühler 41 erweitert, welcher in Reihe mit dem Kältemittelausgang des Hochdruckchillers 12 in den Kältemittelkreis integriert ist.

Ein Kältemittelausgang des Gaskühlers 41 ist sowohl an dem Treibmasseneingang 22 des ersten Ejektors 21 als auch an dem Kältemittelausgang für flüssiges Kältemittel des Flüssigkeitsabscheiders 14 angeschlossen.

Bevorzugterweise kann ein nicht dargestellter Wasserwärmetauscher oder ein Luftheizer für die Innenraumluft des Fahrzeuginnenraums 110 vorgesehen sein, um den Heiz- und den Reheat-Betrieb zur Lufttrocknung sicherzustellen.

Im dargestellten Ausführungsbeispiel sind drei Ventile bzw. Absperrventile 51, 52, 53 erforderlich, um den ersten Ejektor 21 wahlweise mit dem aus dem Gaskühler 41 austretenden oder aus dem Hochdruckchiller 12 austretenden Kältemittel anzutreiben.

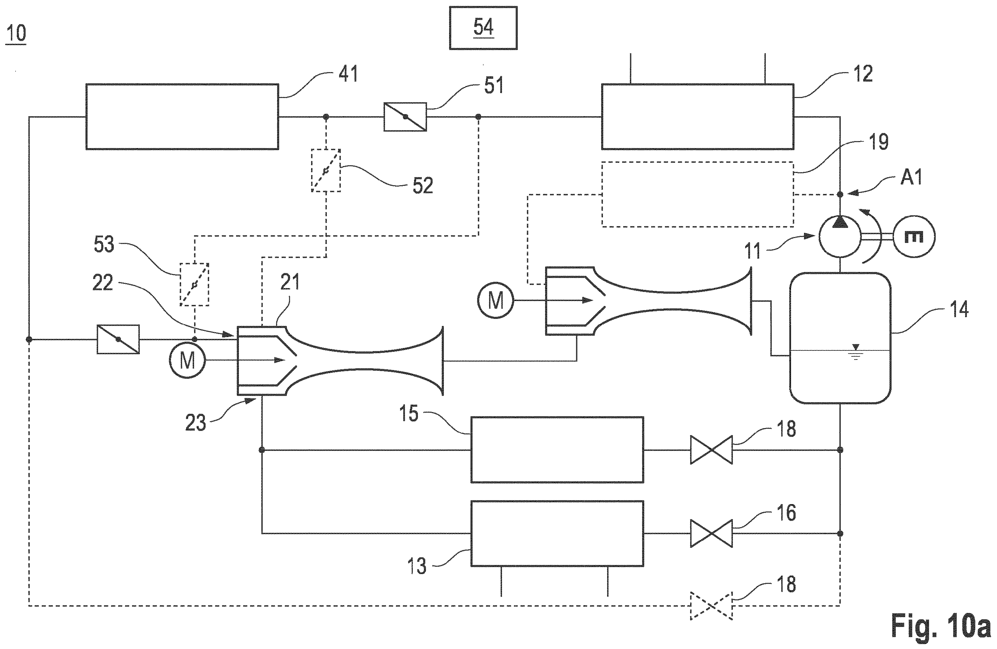

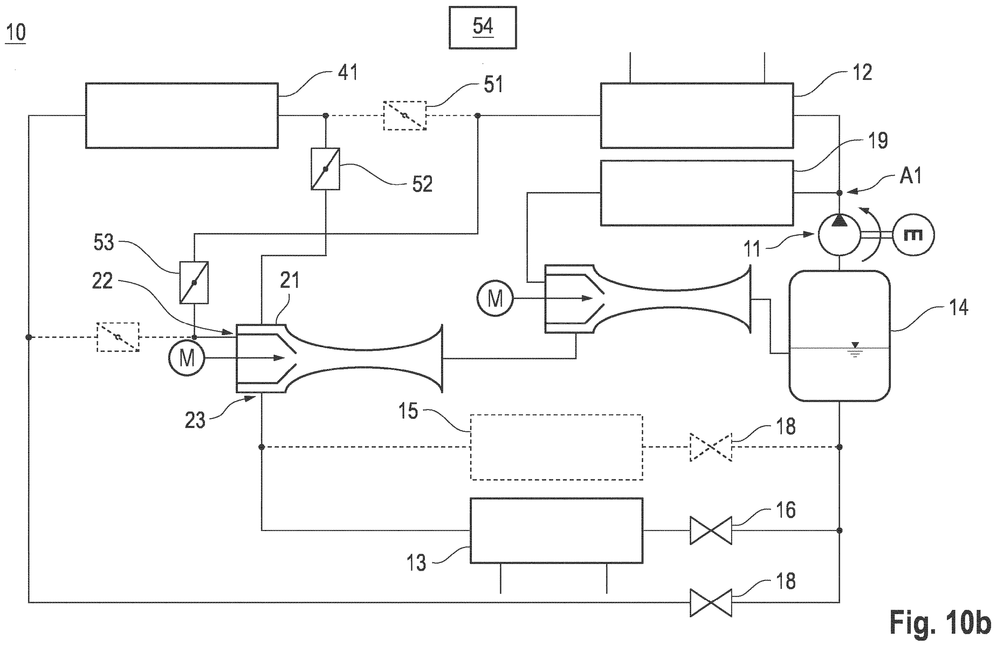

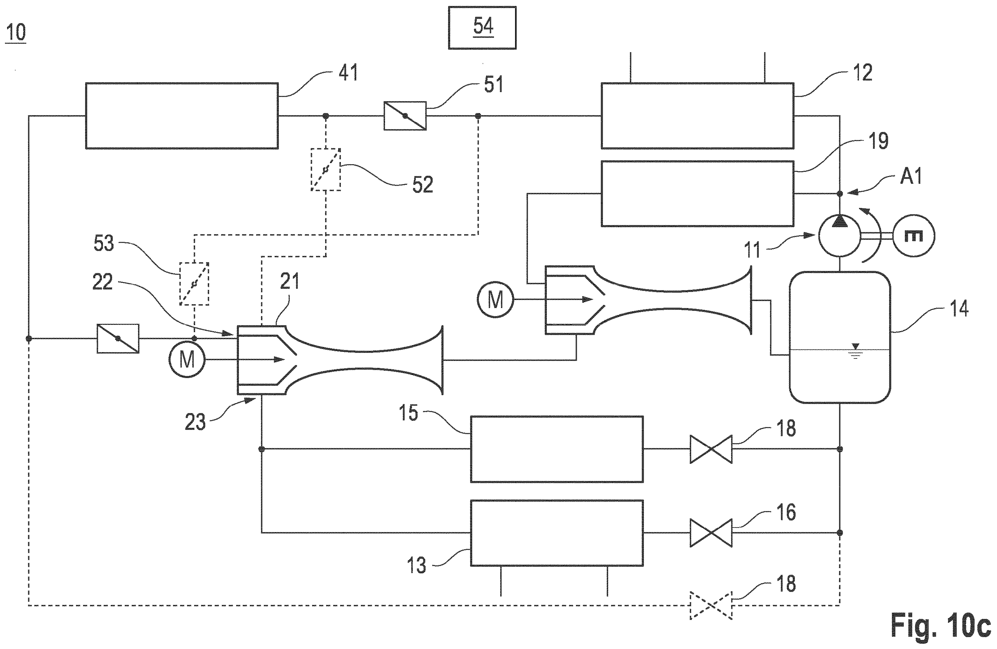

Die Fig. 10a, Fig. 10b und Fig. 10c zeigen schematische Darstellungen einer Klimatisierungsvorrichtung 10 gemäß einem zehnten Ausführungsbeispiel in einem Klimaanlagenbetrieb, in einem Wärmepumpenbetrieb und in einem Reheat-Betrieb. Die Klimatisierungsvorrichtung 10 gemäß dem achten Ausführungsbeispiel basiert auf dem dritten Ausführungsbeispiel und weist analog zum zehnten Ausführungsbeispiel drei Absperrventile 51, 52, 53 auf, um die Verbindung zwischen dem Hochdruckchiller 12 oder dem Gaskühler 41 mit dem ersten Ejektor 21 zu steuern.

Bevorzugterweise können die jeweiligen Absperrventile 51, 52, 53 durch ein Steuergerät 54 gesteuert werden, welches beispielsweise auch die Expansionsventile 16, 18 kontrollieren kann.

In dem zehnten Ausführungsbeispiel werden sowohl das Heizen, als auch Kühlen und Reheat durch direkte Wärmeübergabe aus dem Kältemittelkreis zum Fahrzeuginnenraum 110 realisiert.

Dem Gaskühler 41 ist ein weiteres Expansionsventil 18 nachgeschaltet, welches im Wärmepumpenbetrieb eingesetzt wird. Über die Absperrventile 51, 52, 53 wird der Innenraumkondensator 19 im Wärmepumpenbetrieb und im Reheat-Betrieb vom Kältemittel durchströmt, um eine Wärmeleistung für den Fahrzeuginnenraum 110 bereitzustellen.

Im Klimaanlagenbetrieb der Klimatisierungsvorrichtung 10 wird der Innenraumkondensator 19 vom Kältemittelkreis entkoppelt, und nur der Innenraumverdampfer 15 wird zum Erzeugen von Kälteleistung genutzt.

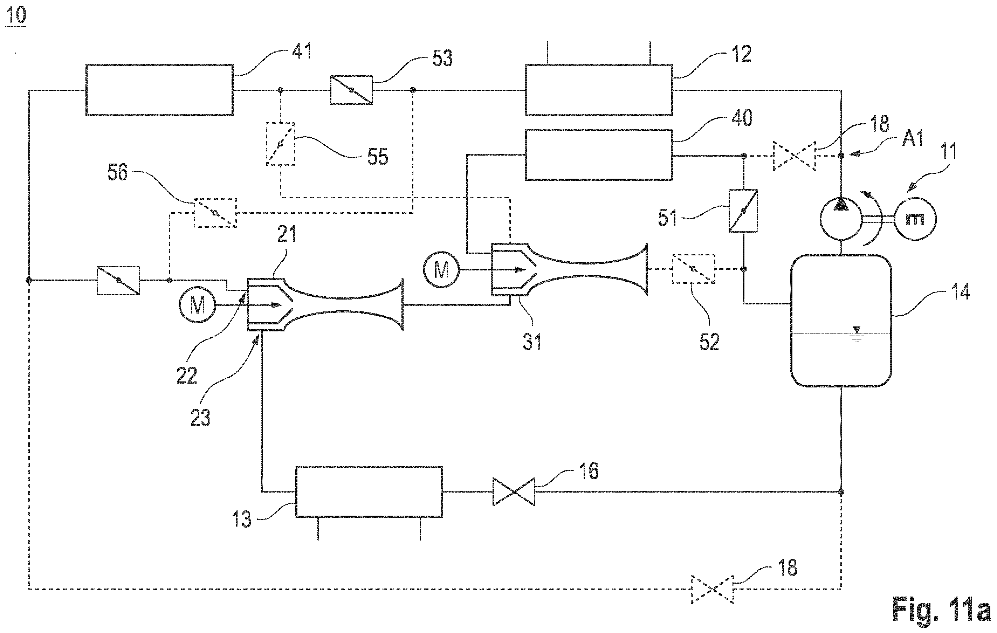

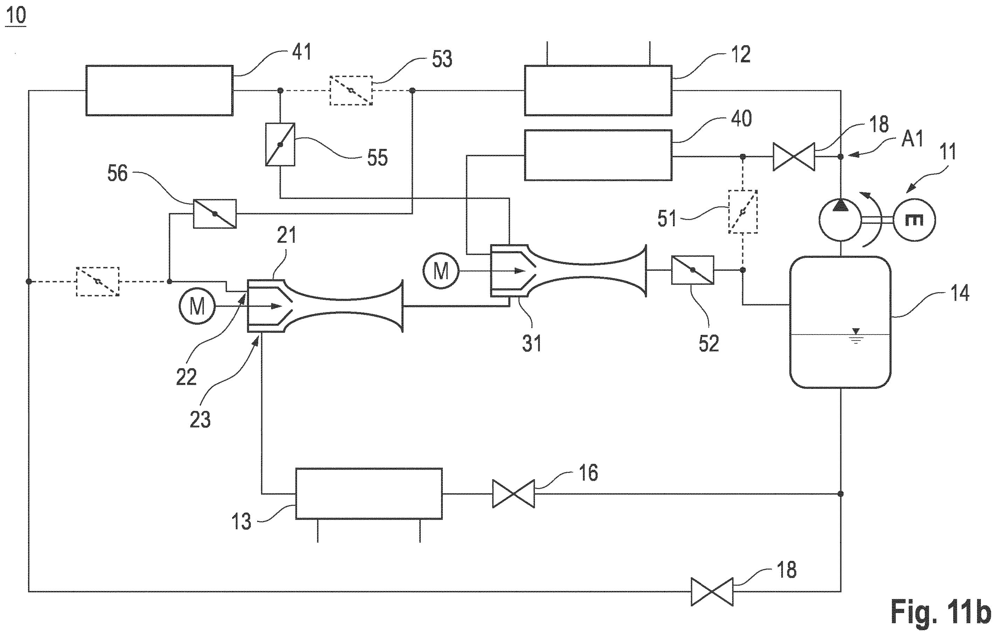

In der Fig. 11a und der Fig. 11b sind schematische Darstellungen einer Klimatisierungsvorrichtung 10 gemäß einem elften Ausführungsbeispiel in einem Klimaanlagenbetrieb und in einem Heizbetrieb veranschaulicht. Das elfte Ausführungsbeispiel der Klimatisierungsvorrichtung 10 basiert auf dem sechsten Ausführungsbeispiel. Analog hierzu kann abhängig davon, ob der Innenraumwärmetauscher 40 über die dem Kompressor 11 nachgelagerte Abzweigung A1 oder über den Flüssigkeitsabscheider 14 mit Kältemittel versorgt wird, eine Wärmeleistung oder eine Kälteleistung im Innenraumwärmetauscher 40 generiert und an den Fahrzeuginnenraum 110 abgeführt werden.

Durch den zusätzlichen Gaskühler 41 sind drei weitere Absperrventile 53, 55, 56 zu den bereits vorhandenen zwei Absperrventilen 51, 52 erforderlich, um den Kältemittelstrom zu steuern.

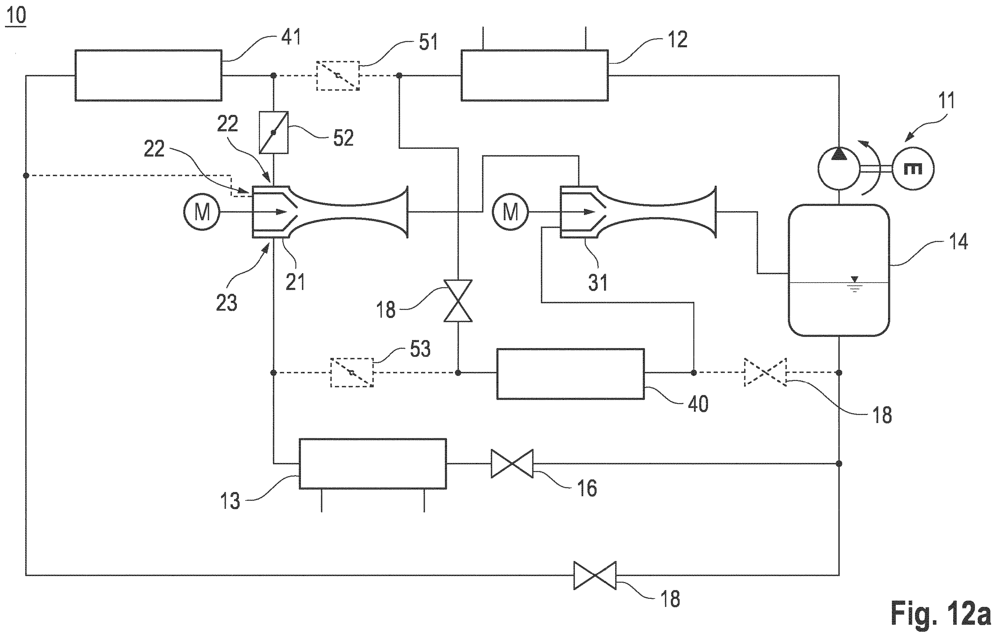

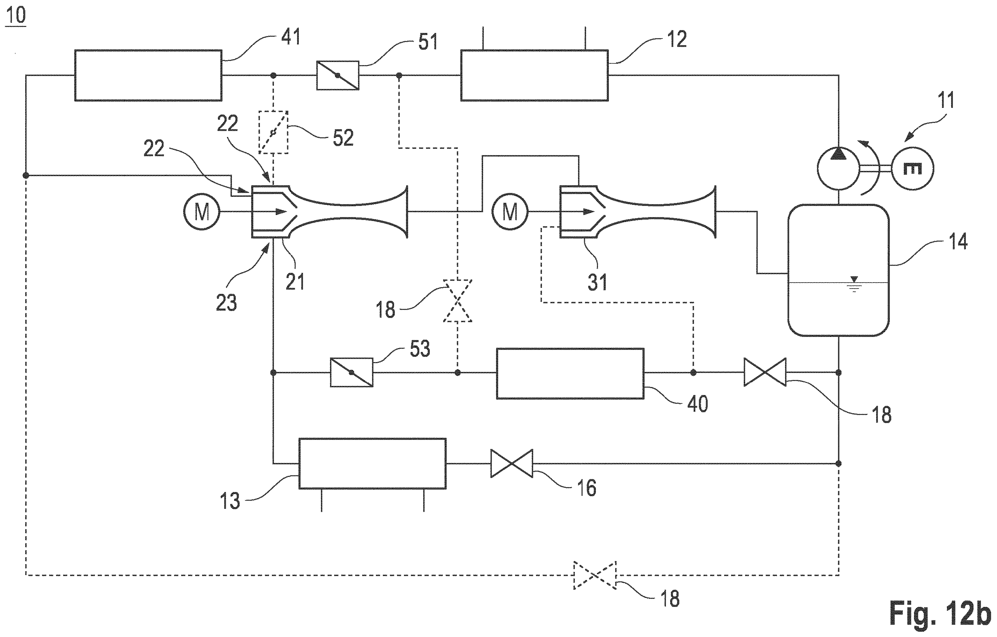

Die Fig. 12a und Fig. 12b zeigen schematische Darstellungen einer Klimatisierungsvorrichtung 10 gemäß einem zwölften Ausführungsbeispiel in einem Klimaanlagenbetrieb und in einem Heizbetrieb. Das zwölfte Ausführungsbeispiel basiert auf dem siebten Ausführungsbeispiel und ist ebenfalls durch den Gaskühler 41 ergänzt.

Der Innenraumwärmetauscher 40 kann optional zum Hochdruckchiller 12 in Reihe geschaltet werden, um im Wärmepumpenbetrieb den Fahrzeuginnenraum 110 zu heizen.

Es ist ein optionaler Wasserwärmetauscher oder ein Luftheizer für die Innenraumluft vorgesehen, um den Reheat-Betrieb zur Lufttrocknung sicherzustellen.

Die Fig. 13 zeigt eine Seitenansicht auf ein erfindungsgemäßes Kraftfahrzeug 100 gemäß einem Ausführungsbeispiel mit einer erfindungsgemäßen Klimatisierungsvorrichtung 10. Das Kraftfahrzeug 100 ist vorzugsweise als ein Elektrofahrzeug bzw. BEV ausgestaltet und weist einen Fahrzeuginnenraum 110 auf, welcher durch die Klimatisierungsvorrichtung 19 geheizt, gekühlt oder entfeuchtet werden kann.

### Bezugszeichenliste

- 100: Kraftfahrzeug
- 110: Fahrzeuginnenraum

- 10: Klimatisierungsvorrichtung
- 11: Kompressor
- 12: Hochdruckchiller
- 13: Niederdruckchiller
- 14: Flüssigkeitsabscheider
- 15: Innenraumverdampfer
- 16: Expansionsventil
- 17: innerer Wärmetauscher
- 18: Expansionsventil
- 19: Innenraumkondensator

- 21: erster Ejektor
- 22: Treibmasseneingang des ersten Ejektors
- 23: Saugmasseneingang des ersten Ejektors
- 24: Ausgang des ersten Ejektors
- 25: elektrischer Antrieb des ersten Ejektors

- 31: zweiter Ejektor
- 32: Treibmasseneingang des zweiten Ejektors
- 33: Saugmasseneingang des zweiten Ejektors
- 34: Ausgang des zweiten Ejektors

- 40: Innenraumwärmetauscher
- 41: Gaskühler

- 51: Ventil / Absperrventil
- 52: Ventil / Absperrventil
- 53: Ventil / Absperrventil
- 54: Steuergerät
- 55: Ventil / Absperrventil
- 56: Ventil / Absperrventil

- A1: erste Abzweigung
- A2: zweite Abzweigung
- A3: dritte Abzweigung

## Patentansprüche

1. Klimatisierungsanordnung (10) zum Wärmen oder Kühlen eines Raums, insbesondere eines Fahrzeuginnenraums (110), aufweisend einen Kompressor (11) zum Fördern eines Kältemittels, wobei stromabwärts des Kompressors (11) ein Hochdruckchiller (12) zum Kühlen des Kältemittels und stromaufwärts des Kompressors (11) ein Niederdruckchiller (13) zum Wärmen des Kältemittels angeordnet sind, wobei ein aus dem Hochdruckchiller (12) austretendes Kältemittel einem Treibmasseneingang (22) eines ersten Ejektors (21) und ein aus dem Niederdruckchiller (13) austretendes Kältemittel einem Saugmasseneingang (23) des ersten Ejektors (21) zuführbar ist,
wobei der Ausgang (24) des ersten Ejektors (21) indirekt über einen zweiten Ejektor (31) mit dem Flüssigkeitsabscheider (14) verbunden ist, wobei der Ausgang (34) des zweiten Ejektors (31) mit dem Flüssigkeitsabscheider (14) verbunden ist,
**dadurch gekennzeichnet, dass**
der Ausgang (24) des ersten Ejektors (21) mit einem Saugmasseneingang (33) des zweiten Ejektors (31) und
eine dem Kompressor (11) stromabwärts oder eine dem Kompressor (11) stromaufwärts, oder eine dem Hochdruckchiller (12) stromabwärts angeordnete Abzweigung über einen Innenraumwärmetauscher (40) mit einem Treibmasseneingang (32) des zweiten Ejektors (31) verbunden ist,
sodass der Innenraumwärmetauscher (40) alternativ mit der Hochdruckseite und mit der Niederdruckseite des Kältemittels verbunden werden kann, um eine Wärmeleistung oder eine Kälteleistung dem Raum, insbesondere dem Fahrzeugraum (10) zuzuführen.

2. Klimatisierungsanordnung nach Anspruch 1, wobei ein Innenraumverdampfer (15) parallel zum Niederdruckchiller (13) geschaltet ist, wobei dem Innenraumverdampfer (15) und/oder dem Niederdruckchiller (13) ein Expansionsventil (16, 18) vorgeschaltet ist.

3. Klimatisierungsanordnung nach einem der Ansprüche 1 oder 2, wobei ein Kältemittelausgang des Hochdruckchillers (12) oder des Gaskühlers (41) thermisch mit einem Kältemitteleingang des Kompressors (11), insbesondere über einen inneren Wärmetauscher (17), gekoppelt ist.

4. Klimatisierungsanordnung nach einem der Ansprüche 1 bis 3, wobei eine dem Kompressor (11) stromabwärts angeordnete Abzweigung (A1) in einem Heizbetrieb über den Innenraumwärmetauscher (40) mit einem Treibmasseneingang (32) des zweiten Ejektors (31) verbunden ist und in einem Kühlbetrieb eine dem Kompressor stromaufwärts angeordnete Abzweigung über den Innenraumwärmetauscher (40) mit dem Treibmasseneingang (32) des zweiten Ejektors (31) verbunden ist.

5. Klimatisierungsanordnung nach einem der Ansprüche 1 bis 3, wobei in einem Heizbetrieb eine dem Hochdruckchiller (12) stromabwärts angeordnete Abzweigung (A2) über den Innenraumwärmetauscher (40) mit dem Treibmasseneingang (32) des zweiten Ejektors (31) verbunden ist und in einem Kühlbetrieb eine dem Kompressor stromaufwärts angeordnete Abzweigung über den Innenraumwärmetauscher (40) mit dem Treibmasseneingang (32) des zweiten Ejektors (31) verbunden ist.

6. Klimatisierungsanordnung nach einem der Ansprüche 1 bis 3, wobei in einem Kühlbetrieb den Innenraumwärmetauscher (40) ein stromaufwärts des Niederdruckchillers (13) abgezweigtes (A3) Kältemittel durchströmt und mit dem Saugmasseneingang (23) des ersten Ejektors (21) verbunden ist; und wobei in einem Heizbetrieb den Innenraumwärmetauscher (40) ein dem Hochdruckchiller (12) stromabwärts abgezweigtes Kältemittel durchströmt und mit dem Treibmasseneingang (32) des zweiten Ejektors (31) verbunden ist.

7. Klimatisierungsanordnung nach einem der Ansprüche 1 bis 5, wobei zwischen dem Kältemittelausgang des Hochdruckchillers (12) und dem Treibmasseneingang (22) des ersten Ejektors (21) oder zwischen dem Kältemittelausgang des Flüssigkeitsabscheiders (14) und dem Treibmasseneingang (22) des ersten Ejektors (21) ein Gaskühler (41) schaltbar ist.

8. Klimatisierungsanordnung nach einem der Ansprüche 1 bis 7, wobei ein Kältemittelausgang eines Gaskühlers (41) mit dem Treibmasseneingang (32) des zweiten Ejektors (31) verbindbar ist.

9. Kraftfahrzeug (100), aufweisend eine Klimatisierungsanordnung (10) gemäß einem der vorhergehenden Ansprüche.

## Claims

1. Air-conditioning arrangement (10) for heating or cooling a space, in particular a vehicle compartment (110), having a compressor (11) for conveying a refrigerant, wherein a high-pressure chiller (12) for cooling the refrigerant is arranged downstream of the compressor (11) and a low-pressure chiller (13) for heating the refrigerant is arranged upstream of the compressor (11), wherein a refrigerant exiting the high-pressure chiller (12) can be fed to a drive mass inlet (22) of a first ejector (21) and a refrigerant exiting the low-pressure chiller (13) can be fed to a suction mass inlet (23) of the first ejector (21), wherein the outlet (24) of the first ejector (21) is indirectly connected to the liquid separator (14) via a second ejector (31), wherein the outlet (34) of the second ejector (31) is connected to the liquid separator (14),
**characterized in that**
the outlet (24) of the first ejector (21) is connected to a suction mass inlet (33) of the second ejector (31) and
a branch arranged downstream of the compressor (11) or a branch arranged upstream of the compressor (11) or a branch arranged downstream of the high-pressure chiller (12) is connected to a drive mass inlet (32) of the second ejector (31) via an indoor heat exchanger (40),
so that the indoor heat exchanger (40) can alternatively be connected to the high-pressure side and to the low-pressure side of the refrigerant in order to supply a heat output or a cooling output to the space, in particular the vehicle compartment (10).

2. Air-conditioning arrangement according to claim 1, wherein an indoor evaporator (15) is connected in parallel with the low-pressure chiller (13), wherein an expansion valve (16, 18) is connected upstream of the indoor evaporator (15) and/or the low-pressure chiller (13).

3. Air conditioning arrangement according to one of claims 1 or 2, wherein a refrigerant outlet of the high-pressure chiller (12) or the gas cooler (41) is thermally coupled to a refrigerant inlet of the compressor (11), in particular via an indoor heat exchanger (17).

4. Air-conditioning arrangement according to one of claims 1 to 3, wherein a branch (A1) arranged downstream of the compressor (11) is connected in a heating mode via the indoor heat exchanger (40) to a drive mass inlet (32) of the second ejector (31) and in a cooling mode a branch arranged upstream of the compressor is connected via the indoor heat exchanger (40) to the drive mass inlet (32) of the second ejector (31).

5. Air-conditioning arrangement according to one of claims 1 to 3, wherein in a heating mode a branch (A2) arranged downstream of the high-pressure chiller (12) is connected via the indoor heat exchanger (40) to the drive mass inlet (32) of the second ejector (31) and in a cooling mode a branch arranged upstream of the compressor is connected via the indoor heat exchanger (40) to the drive mass inlet (32) of the second ejector (31).

6. Air-conditioning arrangement according to one of claims 1 to 3, wherein in a cooling mode a refrigerant (A3) branched off upstream of the low-pressure chiller (13) flows through the indoor heat exchanger (40) and is connected to the suction mass inlet (23) of the first ejector (21); and wherein, in a heating mode, a refrigerant branched off downstream of the high-pressure chiller (12) flows through the indoor heat exchanger (40) and is connected to the drive mass inlet (32) of the second ejector (31).

7. Air conditioning arrangement according to one of claims 1 to 5, wherein a gas cooler (41) can be connected between the refrigerant outlet of the high-pressure chiller (12) and the drive mass inlet (22) of the first ejector (21) or between the refrigerant outlet of the liquid separator (14) and the drive mass inlet (22) of the first ejector (21).

8. Air conditioning arrangement according to one of claims 1 to 7, wherein a refrigerant outlet of a gas cooler (41) can be connected to the drive mass inlet (32) of the second ejector (31).

9. Motor vehicle (100) having an air conditioning arrangement (10) according to one of the preceding claims.

## Revendications

1. Agencement de climatisation (10) pour chauffer ou refroidir un espace, en particulier un habitacle de véhicule (110), présentant un compresseur (11) pour refouler un fluide frigorigène, un refroidisseur haute pression (12) pour refroidir le fluide frigorigène étant disposée en aval du compresseur (11) et un refroidisseur basse pression (13) pour chauffer le fluide frigorigène étant disposée en amont du compresseur (11), un fluide frigorigène sortant du refroidisseur haute pression (12) pouvant être amené à une entrée de masse motrice (22) d'un premier éjecteur (21) et un fluide frigorigène sortant du refroidisseur basse pression (13) pouvant être amené à une entrée de masse aspirante (23) du premier éjecteur (21),
la sortie (24) du premier éjecteur (21) étant indirectement reliée au séparateur de liquide (14) par l'intermédiaire d'un deuxième éjecteur (31), la sortie (34) du deuxième éjecteur (31) étant reliée au séparateur de liquide (14),
**caractérisé en ce que**
la sortie (24) du premier éjecteur (21) est reliée à une entrée de masse d'aspiration (33) du deuxième éjecteur (31) et
une dérivation située en aval du compresseur (11) ou une dérivation située en amont du compresseur (11) ou une dérivation située en aval du refroidisseur haute pression (12) est reliée à une entrée de masse propulsive (32) du deuxième éjecteur (31) par l'intermédiaire d'un échangeur de chaleur d'habitacle (40),
de sorte que l'échangeur de chaleur d'habitacle (40) peut être relié alternativement au côté haute pression et au côté basse pression du fluide frigorigène pour fournir une puissance thermique ou une puissance frigorifique à l'espace, en particulier à l'habitacle (10) du véhicule.

2. Agencement de climatisation selon la revendication 1, dans lequel un évaporateur d'habitacle (15) est monté en parallèle avec le refroidisseur basse pression (13), une soupape de détente (16, 18) étant montée en amont de l'évaporateur d'habitacle (15) et/ou du refroidisseur basse pression (13).

3. Agencement de climatisation selon l'une des revendications 1 ou 2, dans lequel une sortie de fluide frigorigène du refroidisseur haute pression (12) ou du refroidisseur de gaz (41) est couplée thermiquement à une entrée de fluide frigorigène du compresseur (11), notamment via un échangeur de chaleur interne (17).

4. Agencement de climatisation selon l'une des revendications 1 à 3, dans lequel une dérivation (A1) disposée en aval du compresseur (11) est reliée à une entrée de masse propulsive (32) du deuxième éjecteur (31) par l'intermédiaire de l'échangeur de chaleur intérieur (40) dans un mode de chauffage et dans lequel une dérivation disposée en amont du compresseur est reliée à l'entrée de masse propulsive (32) du deuxième éjecteur (31) par l'intermédiaire de l'échangeur de chaleur intérieur (40) dans un mode de refroidissement.

5. Agencement de climatisation selon l'une des revendications 1 à 3, dans lequel, en mode de chauffage, une dérivation (A2) située en aval du refroidisseur haute pression (12) est reliée à l'entrée de masse propulsive (32) du deuxième éjecteur (31) par l'intermédiaire de l'échangeur de chaleur d'habitacle (40) et, en mode refroidissement, une dérivation située en amont du compresseur est reliée à l'entrée de masse propulsive (32) du deuxième éjecteur (31) par l'intermédiaire de l'échangeur de chaleur d'habitacle (40).

6. Agencement de climatisation selon l'une des revendications 1 à 3, dans lequel, dans un mode de refroidissement, un fluide frigorigène (A3) dérivé en amont du refroidisseur basse pression (13) traverse l'échangeur de chaleur d'habitacle (40) et est relié à l'entrée de masse aspirante (23) du premier éjecteur (21); et dans lequel, dans un mode de chauffage, un fluide frigorigène dérivé en aval du refroidisseur haute pression (12) traverse l'échangeur de chaleur d'habitacle (40) et est relié à l'entrée de masse propulsive (32) du deuxième éjecteur (31).

7. Agencement de climatisation selon l'une des revendications 1 à 5, dans lequel un refroidisseur de gaz (41) peut être commuté entre la sortie de fluide frigorigène du refroidisseur haute pression (12) et l'entrée de masse motrice (22) du premier éjecteur (21) ou entre la sortie de fluide frigorigène du séparateur de liquide (14) et l'entrée de masse motrice (22) du premier éjecteur (21).

8. Agencement de climatisation selon l'une des revendications 1 à 7, dans lequel une sortie de fluide frigorigène d'un refroidisseur de gaz (41) peut être reliée à l'entrée de masse propulsive (32) du deuxième éjecteur (31).

9. Véhicule automobile (100) comportant un agencement de climatisation (10) selon l'une quelconque des revendications précédentes.
